# EUROPEAN PATENT APPLICATION

(11) **EP 4 628 633 A1**
(43) Date of publication of application: **08.10.2025**
(21) Application number: 23897127.9
(22) Date of filing: 31.07.2023
(51) Int. Cl.: D01F 6/92, C08K 5/103, C08L 67/04, D04H 1/728

(54) **FIBER**

(30) Priority: 28.11.2022 JP 2022189676
(71) Applicant: Kao Corporation, Chuo-ku, Tokyo 103-8210 (JP)
(72) Inventor: KONDO, Yuki, Haga-gun, Tochigi 321-3497 (JP); ISHIDA, Kaori, Haga-gun, Tochigi 321-3497 (JP); YONETA, Keitaro, Haga-gun, Tochigi 321-3497 (JP)
(74) Representative: Hoffmann Eitle
(86) International application number: PCT/JP2023/027984
(87) International publication number: WO 2024/116467

(57) **Abstract**

A fiber includes 50 mass% or more of a component A below and 10 mass% or more of a component B below with respect to a mass of a whole fiber. The fiber includes the component A and the component B inside the fiber. The component A is an aliphatic polyester. The component B is a compound that is an ester compound of a polyhydric alcohol and a fatty acid, is water-insoluble, has a solidification point of 30°C or more, and includes a fatty acid group having 14 or more and less than 24 carbon atoms.

## Description

### FIELD OF THE INVENTION

The present invention relates to a fiber.

### BACKGROUND OF THE INVENTION

Fibers have been used in various situations, such as a filter, a hygiene material, a cosmetic material, and a medical material (for example, Patent Literatures 1 to 4). For example, in the field of medicine, ultrafine fibers (for example, having a fiber diameter of 50 µm or less) have been examined to be used as a scaffolding material, and in the field of cosmetics, ultrafine fibers have been examined to be used as a skin care sheet and the like. The fibers are sometimes impregnated with active ingredients as a liquid and are used, and therefore, it is important to control the physical property of a fiber surface, such as hydrophilicity and hydrophobicity, corresponding with the liquid property of the liquid with which the fibers are impregnated. While many studies on fabrication of fibers using thermoplastic resins have been conducted with the development of spinning techniques, the thermoplastic resins are generally hydrophobic, and its usage is limited if the fibers keep the surface physical property.

### CITATION LIST

### PATENT LITERATURES

Patent Literature 1: JP-A-2020-143157 ("JP-A" means unexamined published Japanese patent application)
Patent Literature 2: JP-A-2020-169201
Patent Literature 3: JP-T-2012-207350 ("JP-T" means published searched patent publication)
Patent Literature 4: WO 2006/022430

### SUMMARY OF THE INVENTION

The present invention provides a fiber including 50 mass% or more of a component A below and 10 mass% or more of a component B below with respect to a mass of a whole fiber, and including the component A and the component B inside the fiber.

The component A is an aliphatic polyester,
the component B is a compound that is an ester compound of a polyhydric alcohol and a fatty acid, is water-insoluble, has a solidification point of 30°C or more, and includes a fatty acid group having 14 or more and less than 24 carbon atoms.

Other and further objects, features and advantages of the invention will appear more fully from the following description, appropriately referring to the accompanying drawing.

### BRIEF DESCRIPTION OF DRAWINGS

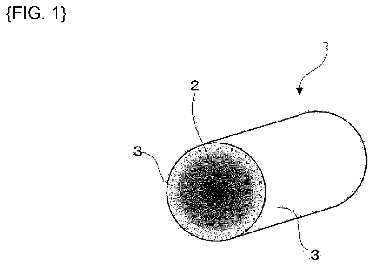

{FIG. 1}
FIG. 1 is a perspective cross-sectional view schematically illustrating one embodiment of a fiber according to the present invention.

### DESCRIPTION OF EMBODIMENTS

The present invention relates to a fiber which can be wet easily with an aqueous solvent, and simultaneously sustain a hydrophilizing property for a long time even in water.

When the aforementioned fiber is used in vivo or on the skin, an aliphatic polyester is sometimes preferably used as a material of the fiber. The fiber using the aliphatic polyester does not have sufficient wettability with an aqueous solvent as it is, and therefore, it has conventionally been a common practice to apply a hydrophilizing agent to a fiber surface. However, since it is an application and attaching to a fiber surface, in a case where the fiber is present in water, the hydrophilizing agent on the fiber surface dissolves and a hydrophilizing effect to the fiber is reduced, and therefore there has been room for improvement.

The fiber of the present invention is a fiber which can be wet easily with an aqueous solvent, and simultaneously sustain a hydrophilizing property for a long time even in water.

The fiber of the present invention will be described below.

The fiber of the present invention preferably includes 50 mass% or more of an aliphatic polyester (hereinafter referred to as a component A) and 10% or more of an ester compound of a polyhydric alcohol and a fatty acid (hereinafter referred to as a component B) as constituent components. The above-described respective content percentages of the component A and the component B mentioned here mean percentages when the mass of the whole fiber of the present invention is 100 mass%.

The component A and the component B are preferably included inside the fibers.

The component B preferably has a solidification point of 30°C or more.

The component B is preferably water-insoluble.

The component B preferably includes a fatty acid group having 14 or more and less than 24 carbon atoms. There may be a plurality of these fatty acid groups.

### (Method for extracting each constituent component)

The fibers are taken out from a fiber aggregation as a measurement target so as to have a mass of approximately 1 g. When the fiber aggregation is a nonwoven fabric, a segment having the above-described mass is cut out. Constituent components are extracted from the taken-out fibers or segment using various kinds of solvents, and isolation for each constituent component is performed by high performance liquid chromatography (HPLC).

### (Method for measuring solidification point)

The "solidification point" is also referred to as a solidification temperature, and means a peak temperature of an exothermic peak that first appears when the temperature of a sample is increased, and after the sample melts, is decreased at 5°C/minute in differential scanning calorimetry (DSC). This measurement is specifically performed as follows. The extracted constituent component by the above-described (Method for extracting each constituent component) is sealed in a sample pan made of aluminum and is heated, and the temperature is increased at 5°C/minute. After the temperature reaches 200°C by the temperature increase, the temperature is decreased at 5°C/minute within 600 seconds. Next, the measurement is terminated at the point when the temperature reaches 0°C.

The above-described peak temperature means a temperature at which the heated component starts to coagulate by the temperature decrease from a molten state. The "molten state" is a state in which the above-described component flows when an external force is applied, and, for example, means a state of being heated to the melting point or more of the target component. The "coagulation" means crystallization, or when the crystallization is not observed, means glass transition.

### (Method for measuring content percentages of Component A and Component B)

The constituent components extracted by the extraction method of each constituent component described in (Method for extracting each constituent component) described above are dissolved in solvents in which the respective constituent components are soluble and that are deuterated, and each constituent component is identified using proton NMR. In view of this, the constituent components corresponding to the components A and B are identified.

Next, the component is extracted from a fiber aggregation with a solvent that can dissolve the identified component A or B, and thus, a content percentage thereof is obtained.

For example, the fiber aggregation is immersed in an organic solvent that can dissolve the component B for 24 hours to extract the component B. Fibers are extracted from the organic solvent, and are dried for 24 hours at 40°C under a reduced pressure of -0.04 MPa. Thereafter, measuring a fiber weight after the drying allows measurement of mass% of the component B. Component B content percentage (mass%) = 100 - (fiber mass after drying under reduced pressure/initial fiber mass) × 100

### (Method for measuring inclusion of Component A and Component B inside fiber)

For the respective constituent components identified in (Method for measuring content percentages of Component A and Component B) described above, the measurement-target fibers are measured by Time-of-Flight Secondary Ion Mass Spectrometry (TOF-SIMS). By analyzing a cross-sectional surface of the fiber taken in a direction perpendicular to a longitudinal direction when the measurement is taken, whether the component A and the component B are included inside the fiber or not is determined.

50 mass% or more of the component A is preferably included with respect to the mass of the whole fiber, and is preferably a main base of the fiber of the present invention. The aliphatic polyester having a plurality of ester bonds with polarity serves as a main base, which allows the fiber of the present invention to have an enhanced affinity for a living body. The fiber of the present invention is allowed to be an ultrafine fiber controlled to enhance hydrophilicity, which is meaningful as, for example, a cosmetic material.

The component A has a content percentage with respect to the mass of the whole fiber of preferably 55 mass% or more, more preferably 60 mass% or more, and further preferably 75 mass% or more from the aspect of further enhancing the above-described effects.

The component A has a content percentage with respect to the mass of the whole fiber of preferably 90 mass% or less, more preferably 87 mass% or less, and further preferably 85 mass% or less from the aspect of easily inducing hydrophilicity.

10 mass% or more of the component B is preferably included with respect to the mass of the whole fiber as an additive in the fiber of the present invention. This adds hydrophilicity to the fiber of the present invention. The fiber of the present invention can be wet easily with an aqueous solvent. The "aqueous solvent" mentioned here is a solvent having water as a main component, and a small amount of an organic solvent miscible with water may be added to the aqueous solvent. The "aqueous solvent" may be a solvent having water in which an oil phase is emulsified and dispersed as a main component.

The component B preferably includes a plurality of hydroxyl groups in a polyhydric alcohol portion, and preferably has less than 24 carbon atoms in the fatty acid group. In this regard, the ratio of the number of the fatty acid groups to the number of the hydroxyl groups (the number of the fatty acid groups/the number of the hydroxyl groups) is preferably 0.6 or less. These configurations contribute to the hydrophilicity. The number of the fatty acid groups and the number of the hydroxyl groups in the component B are calculated based on the molecular structure identified in (Method for measuring content percentages of Component A and Component B) described above.

From this aspect, the component B preferably includes a compound without a repeating unit in the fatty acid group.

In addition, the component B preferably includes a compound having an ester structure and having a hydrophobic group constituting the fatty acid group. Thus, the component B has a fundamental structural similarity to the component A. Therefore, the component B has high miscibility with the component A, and the component B is difficult to separate from the component A in the fiber of the present invention. In the producing method described below, the component B is well dispersed in the component A, and stable spinning becomes possible. This is technically meaningful in producing ultrafine fibers.

From the aspect of having a structural similarity with the component A and making difficult to separate the component B from the component A in the fiber, the fatty acid group of the compound included in the component B is preferably a saturated fatty acid group. From the aspect of further having a structural similarity to the component A, the saturated fatty acid group is further preferably a straight chain saturated fatty acid.

The hydrophilic group of the compound included in the component B preferably has a molecular weight of 100 g/mol or less. The decreased molecular weight of the hydrophilic group reduces steric hindrance more, and the molecules of the component B is likely to be densely arranged. As a result, the component B can be more efficiently arranged at the outer side of the fiber, which allows more efficiently hydrophilizing even a thin fiber. The molecular weight of the hydrophilic group here can be calculated as a value obtained by subtracting the sum of the molecular weights of the fatty acid groups from the molecular weight of the component B.

The "fatty acid group" in the component B means a chemical structure portion derived from the fatty acid. Specifically, the "fatty acid group" means a structure including a hydrocarbon group of the fatty acid and a carbonyl group bonded to the hydrocarbon group in a structure in which a polyhydric alcohol is ester bonded to a fatty acid. The "carbon atoms" of the fatty acid group mean carbon atoms in the "structure including a hydrocarbon group of the fatty acid and a carbonyl group bonded to the hydrocarbon group" constituting the fatty acid group. Here, when the fatty acid group has a substituent, the carbon atoms of the substituent are also included in the "carbon atoms."

The "polyhydric alcohol portion" in the component B means a chemical structure portion derived from the polyhydric alcohol, and is a portion excluding the "fatty acid group" in the ester compound of the component B.

The component B is preferably water-insoluble. "Water-insoluble" mentioned here means that the percentage of a water-insoluble ingredient measured by the method below is 85 mass% or more.

The component B preferably includes the fatty acid group having 14 or more and less than 24 carbon atoms, and preferably has a polyhydric alcohol portion esterified with the fatty acid group. This contributes to the water insolubility.

The component B preferably has a solidification point of 30°C or more. This causes the component B to be present in a solid state at room temperature (23°C) and to be less likely to dissolve in water.

### (Method for measuring water insolubility of Component B)

The extraction is performed by (Method for extracting each constituent component) described above, and the component B is identified by (Method for measuring content percentages of Component A and Component B). 50 mL of deionized water is put in a 100 mL beaker in an environment region with a temperature of 23°C and a relative humidity (RH) of 50%. 0.5 g of the component B in a particle state with a diameter of 1 mm or less is added to the deionized water, and is left to stand for 24 hours. Thereafter, filtration under reduced pressure is performed using a filter paper in order to take the component B out. Then, a filter paper with a retention particle diameter of 5 µm (for example, Qualitative Filter Paper No.2 manufactured by ADVANTEC TOYO KAISHA, LTD.) is used. The mass of the filter paper is measured before the filtration under reduced pressure is performed. The filter paper and the component B are dried under reduced pressure for 24 hours when the filtration under reduced pressure is performed. This drying under reduced pressure is performed specifically at a temperature of 40°C and with a decompression degree of -0.04 MPa.

The masses of the filter paper and the component B on the filter paper after the drying under reduced pressure are measured, and the mass of the filter paper before the filtration under reduced pressure is subtracted, thus calculating the mass of the component B that has been insoluble in the water. The following formula (1) calculates the percentage of the water-insoluble ingredient in the component B. (Percentage of water-insoluble ingredient) = ((masses of filter paper and component B after drying under reduced pressure - mass of filter paper before filtration under reduced pressure)/mass of component B at measurement) × 100

The component B has a content percentage with respect to the mass of the whole fiber of preferably 11 mass% or more, more preferably 15 mass% or more, and further preferably 18 mass% or more from the aspect of further enhancing the above-described effects.

The component B has a content percentage with respect to the mass of the whole fiber of preferably 40 mass% or less, more preferably 30 mass% or less, and further preferably 25 mass% or less. The content percentage equal to or less than the above-described upper limits enables fiber strength to be maintained.

The solidification point of the compound included in the component B is preferably 40°C or more, more preferably 50°C or more, and further preferably 70°C or more from the aspect of further improving the above-described effects.

The solidification point of the compound included in the component B is preferably 100°C or less, more preferably 90°C or less, and further preferably 80°C or less from the aspect of improving preservation stability.

In the compound included in the component B, the fatty acid group has preferably 16 or more carbon atoms, more preferably 18 or more carbon atoms, and further preferably 20 or more carbon atoms from the aspect of further enhancing the aforementioned water insolubility.

The fatty acid group has preferably 23 or less carbon atoms, and more preferably 22 or less carbon atoms from the aspect of further clarifying hydrophilicity of the fiber of the present invention.

In the fiber of the present invention, containing the aforementioned content percentages of the component A and the component B causes the component B to be less likely to be dissolved in water even when the fiber of the present invention is in contact with the water or is in the water, and the hydrophilicity is likely to be maintained. As a result, the fiber of the present invention can be wet easily with an aqueous solvent, and simultaneously sustain a hydrophilizing property for a long time even in the water.

Such a fiber of the present invention is usable in such a way that, for example, the fibers are made into a sheet-shaped nonwoven fabric and impregnated with various kinds of water-soluble liquids as necessary. The fiber of the present invention and the nonwoven fabric including the fibers can be included as a constituent of various kinds of fiber products. Examples of the fiber products include, for example, a scaffolding material and the like in the field of medicine, and a skin care sheet and the like in the field of cosmetics.

The fiber of the present invention preferably has a wetting tension test value of the fiber described below of 73 mN/m or more as the fiber having the aforementioned wettability. It is indicated that the higher the wetting tension test value is, the higher the wettability of the fiber of the present invention is.

### (Method for wetting tension test of fiber)

First, a 30 mm × 30 mm nonwoven fabric with a basis weight of 20 g/m² is prepared using the measurement target fiber. The prepared nonwoven fabric is stretched horizontally in the air in an environment region with an ambient temperature of 23°C, and 0.02 mL of a wetting tension test liquid is dropped on the upper surface of the nonwoven fabric using a syringe. After a lapse of two seconds from the drop of the test liquid, the state of the test liquid on the nonwoven fabric upper surface on which the dropping has been performed is visually observed. In the observation, when the test liquid permeates in a thickness direction of the nonwoven fabric or spread in a surface direction, a similar operation is performed after changing the test liquid to a test liquid with larger surface tension. When the test liquid fails to permeate the nonwoven fabric and its droplet remains on the upper surface of the nonwoven fabric, or when the test liquid fails to spread in the surface direction and wetness is hardly observed on the upper surface, the surface tension of the test liquid used in the drop operation immediately before such a case, that is, the test liquid having the largest surface tension among the test liquids that have successfully permeated or spread on the nonwoven fabric is set as the wetting tension of the nonwoven fabric in an ambient temperature of 20°C. "Wetting Tension Test Mixture" (trade name) manufactured by FUJIFILM Wako Pure Chemical Corporation is used as a wetting tension test liquid. This is a mixture of ethylene glycol monoethyl ether, formamide, methanol, and water prepared in compliance with Japanese Industrial Standard K 6768:1999.

The fiber of the present invention has a "contact angle of water measured with the compound included in the component B in a plate shape" described below of preferably 46° or less, and more preferably 9.2° or more and 45.9° or less as the fiber having the aforementioned hydrophilicity. It is indicated that the smaller the contact angle is, the higher the hydrophilicity is.

### (Method for measuring contact angle of compound included in Component B)

First, the compound included in the component B is heat melted and formed into a plate shape. The formed plate has a size of 5 cm × 5 cm and a thickness of 1 mm. A drop method is used for the formed plate, and the contact angle is measured.

Specifically, an automatic contact angle meter MCA-J manufactured by Kyowa Interface Science Co., Ltd. is used as measurement equipment. As a dripping liquid, a deionized water is used. In an environment region with a temperature of 25 degrees and a relative humidity (RH) of 65%, a liquid amount discharged from an inkjet type water droplet injector (manufactured by Cluster Technology Co., Ltd., Pulselnjector CTC-25 having an injector hole diameter of 25 µm) is set to 1 µm, and a water droplet is dropped immediately above the formed plate. The state of dropping is recorded by a high-speed recording device connected to a camera horizontally installed. From the aspect of performing an image analysis later, the recording device is preferably a personal computer incorporated with a high-speed capture device. In this measurement, an image is recorded every 17 msec. In the recorded video, an image analysis is performed on the first image of a water droplet touching the fiber taken out from the nonwoven fabric using bundled software FAMAS (in which the software version is 2.6.2, the analysis technique is a drop method, the analysis method is a θ/2 method, the image processing algorithm is non-reflective, the image processing image mode is a frame, the threshold level is 200, and the curvature correction is not performed), an angle formed by a surface of the water droplet in contact with air and the formed plate is calculated to serve as a contact angle.

In the fiber of the present invention, various kinds of aliphatic polyesters are usable as the aliphatic polyester included in the component A. For example, the aliphatic polyester included in the component A preferably includes one or two or more selected from polyethylene terephthalate, polylactic acid, polycaprolactone (hereinafter also referred to as PCL), polybutylene succinate (hereinafter also referred to as PBS), polybutylene succinate adipate (hereinafter also referred to as PBSA), and polydioxanone (hereinafter also referred to as PDO).

Among these, it is more preferred that the aliphatic polyester included in the component A includes a biodegradable compound. This enables reducing an environmental impact in a case where the fibers of the present invention flow out to the environment (for example, in a case where the nonwoven fabric using the fiber of the present invention is used as a cosmetic material, and the fibers flow when it is washed for reuse or the like). Note that "biodegradable" mentioned here means an aliphatic polyester resin having a biodegradation degree of polyester of 30% or more measured in compliance with Japanese Industrial Standard K 6953-1.

Specific examples of the biodegradable aliphatic polyesters preferably include one or two or more selected from PCL, PBS, PBSA, and PDO. Among these, it is preferred that the biodegradable aliphatic polyester includes PCL due to its high biodegradability.

In the nonwoven fabric of the present invention, those having a solidification point of 30°C or more, being water-insoluble, and including a fatty acid group having 14 or more and less than 24 carbon atoms are variously usable for the component B. For example, it is preferred that the component B includes one or two or more selected from glycerin fatty acid ester compounds and polyglyceryl fatty acid ester compounds. From the aspect of further enhancing hydrophilicity of the fiber of the present invention, the ratio of the number of the fatty acid groups to the number of the hydroxyl groups (the number of the fatty acid groups/the number of the hydroxyl groups) is preferably 0.6 or less.

The compound included in the component B preferably has a skeleton having a single bond between carbon atoms, and it is more preferred that the skeleton is a straight chain. Furthermore, the fatty acid group preferably does not have a repeating unit as mentioned above.

The glycerin fatty acid ester compound preferably includes one or two or more selected from, for example, glyceryl behenate, glyceryl stearate, and glyceryl myristate.

The polyglyceryl fatty acid ester compound preferably includes one or two or more selected from, for example, polyglyceryl pentastearate and polyglyceryl pentabehenate.

In such a fiber of the present invention, from the aspect of further enhancing the aforementioned hydrophilicity to further enhance the wettability, it is preferred that the component A constitutes a core portion layer of the fiber and extends in the longitudinal direction (a fiber length direction) of the fiber, and a part of the component B is arranged on the fiber surface (that is, a surface of the core portion layer of the component A). In this case, while the component B is present inside the fiber, a part thereof is shown on the fiber surface side. Some parts of the component B inside the fiber may be mixed with the thermoplastic resin of the component A.

From the similar aspect, it is preferred that a part of the component B covers a peripheral surface of a core portion layer 2 of the component A as a skin layer 3 as a constituent fiber 1 illustrated in FIG. 1. In this regard, an interface between the component concentrations of the skin layer 3 of the component B and the core portion layer 2 of the component A does not necessarily have to be clear, and is preferably blurry. The skin layer 3 of the component B may cover the entire fiber surface, or may partially cover the fiber surface. When the fiber surface is partially covered, the arrangement may be a sea-island structure including a region without the skin layer 3 of the component B in a region with the skin layer 3 of the component B, or the arrangement may have the region with the skin layer 3 of the component B and the region without the skin layer 3 of the component B separated.

In the fiber of the present invention, including specific content percentages of the component A and the component B mentioned above enables a thinner fiber to be formed by the producing method described below, and enhances uniformity of the fiber diameter.

Therefore, the nonwoven fabric produced using the fiber of the present invention preferably has an average fiber diameter of 0.1 µm or more and 5 µm or less. The nonwoven fabric including such ultrafine fibers as the constituent fibers has a fine texture and a soft touch. The nonwoven fabric has a higher capillary force. That is, the fiber of the present invention preferably has a fiber diameter of 0.1 µm or more and 5 µm or less.

When this nonwoven fabric is impregnated with, for example, various hydrophilic solutions and made into a cosmetic material, it less irritates the skin, and a sustained release property when the hydrophilic solution is supplied to the skin is enhanced, thus enabling the effect to be sustained for a longer time. Since the hydrophilizing property is likely to be sustained for a long time, the nonwoven fabric can be repeatedly used by cleaning even after it is used once.

In this regard, when the component A includes a biodegradable compound, an environmental burden is reduced even if a part of the fibers flows out during the cleaning.

From the above-described aspect, the nonwoven fabric produced using the fiber of the present invention has an average fiber diameter of more preferably 4 µm or less, and further preferably 2.5 µm or less.

The average fiber diameter is more preferably 0.2 µm or more, and further preferably 0.5 µm or more from the aspect of improving the fiber strength.

That is, the fiber of the present invention more preferably has a fiber diameter in the above-described range.

### (Method for Measuring Average Fiber Diameter)

Two hundred fibers from which defects, such as lumps of the fibers, intersecting portions of the constituent fibers, and polymer droplets, are eliminated are randomly selected from a two-dimensional image by scanning electron microscope observation, and a width perpendicular to a longitudinal direction (a fiber length direction) of every single fiber (a length when a line passing through the center of the fiber is drawn on a cross-sectional surface perpendicular to the longitudinal direction of the constituent fiber) is measured. The sum of these values is divided by the number of the measured fibers to obtain an average fiber diameter of the measurement target nonwoven fabric. When the cross-sectional surface perpendicular to the longitudinal direction of the fiber is not a circle, the above-described average fiber diameter is converted into an equivalent circle diameter.

Next, a preferable embodiment of the producing method for the fiber of the present invention will be described.

The method of producing fibers of the embodiment preferably uses a thermoplastic resin composition including 50 mass% or more of the component A and 10% or more of the component B. The component A used here is an aliphatic polyester as mentioned above. The component B is a compound that is an ester compound of a polyhydric alcohol and a fatty acid as mentioned above, has a solidification point of 30°C or more, is water-insoluble, and includes a fatty acid group having 14 or more and less than 24 carbon atoms.

A process of heating and melting the thermoplastic resin composition (I) and a process of discharging the thermoplastic resin composition from a nozzle (II) is preferably performed on the thermoplastic resin composition (the component A + the component B).

In the process (I), for example, via a hopper, the component A and the component B are added in a housing connected to the hopper. These component A and component B are heating melted in the housing, a melt of the thermoplastic resin composition (hereinafter also simply referred to as a resin mix melt) is fabricated. This resin mix melt is pressed out toward a discharging nozzle by the rotation of a screw or a pressure by air or the like, and is supplied to a discharge port of a nozzle head portion. The nozzle in this case may be one or may be plural.

Next, the supplied resin mix melt is discharged from the nozzle and spinning is performed in the process (II). The discharged resin mix melt is extended and cooled to be solidified and becomes a fiber as it moves away from the discharge port of the nozzle head portion. At this time, a hole diameter of the discharge port of the nozzle head portion is appropriately set, and thus, the aforementioned ultrafine fibers can be spun. This enables producing of the nonwoven fabric having an average fiber diameter of preferably 5 µm or less. In this process, when the component A and the component B having different solidification points are spun, one with a higher solidification point is solidified earlier during the spinning and therefore stabilized. As one which shows stability at an interface between air and the molten resin emerges there, the one that is easily solidified is formed at the side of the air. Then, the core portion layer 2 and the skin layer 3 mentioned above are likely to be formed due to the difference in solidification point.

In the process (II), the discharge speed of the melt of the thermoplastic resin composition from the nozzle is preferably 0.1 g/minute·nozzle or more, more preferably 0.2 g/minute·nozzle or more, and further preferably 0.5 g/minute·nozzle or more.

The discharge speed of the melt of the thermoplastic resin composition from the nozzle is preferably 10 g/minute·nozzle or less, more preferably 5 g/minute·nozzle or less, and further preferably 2 g/minute·nozzle or less.

The resin mix melt has a viscosity during the nozzle discharging of preferably 1 Pa·s or more, more preferably 2 Pa·s or more, and further preferably 5 Pa·s or more from the aspect of preventing being torn off during spinning.

The viscosity of the resin mix melt when it is discharged from the nozzle is preferably 20 Pa·s or less, more preferably 15 Pa·s or less, and further preferably 10 Pa·s or less from the aspect of reducing the viscosity to easily thin the fibers.

### (Method for measuring viscosity of resin mix melt)

The melt viscosity is measured using a rotational rheometer. Specifically, the measurement is taken using MCR305 manufactured by Anton Paar GmbH. The viscosity measurement is taken at a shear rate of 0.1 s⁻¹ using a φ 50 mm parallel plate as a measuring tool. The measurement temperature is set to a temperature corresponding to the spinning conditions. A sample is set on the plate, a clearance is set to 1 mm after the resin melts, and a portion protruding from the φ 50 mm parallel plate is trimmed. Thereafter, the measurement is held until the sample reaches the measurement temperature, and then, the measuremnt is started. For obtainment of a viscosity value, a value 100 seconds after the start of rotation is used as a measured value.

The method of producinging the fibers of the embodiment preferably performs a heating fluid spraying process in the process (II). This spraying is performed on the resin mix melt in a state before the resin mix melt discharged from the nozzle completely solidifies. The heat of the sprayed heating fluid enables more active extension of the discharged resin mix melt, thus enabling further ultra-thin fibers to be formed. The spraying of the heating fluid may be performed along a discharging direction of the resin mix melt, or may be performed in a direction intersecting with the discharging direction.

The heating fluid preferably has a temperature higher than the solidification point of the component A from the aspect of making the above-described extention more effective.

Specifically, a difference between the temperature of the heating fluid and the solidification point of the component A is preferably 30°C or more, more preferably 40°C or more, and further preferably 50°C or more.

A difference between the temperature of the heating fluid and the solidification point of the component A is preferably 150°C or less, more preferably 140°C or less, and further preferably 130°C or less from the aspect of inhibiting decomposition of the resin.

The method of producing the fibers of the embodiment preferably performs an electrostatic spinning process in the process (II). This electrostatic spinning process may be performed together with the heating fluid spraying process described above, or may be performed instead of the heating fluid spraying process.

The electrostatic spinning process is a process also referred to as an electrospinning method, and is a process of spinning by directly or indirectly charging the nozzle from which the resin is discharged to apply an electric charge to the resin. This enables more active extension, thus enabling a further ultra-thin fibers to be formed. For example, a charged electrode and a high-voltage generator connected to the charged electrode are disposed at a corresponding position separated from the nozzle. This configuration allows application of a high voltage between a nozzle head portion and the charged electrode to form an electric field therebetween, thus enabling the resin mix melt discharged from the nozzle head portion to be charged. The charged electrode is preferably configured of a conductive material, such as metal, or covered with a dielectric material.

In the method of producing the fibers of the embodiment, in addition to the component A and the component B, another agent may be further included as long as the effects of the present invention are not impaired. For example, examples of the other agent include charge control agents, lubricants, antistatic agents, surfactants, plasticizers, and the like from the aspect of increasing the above-described electric charge amount. Other than those, antioxidants, neutralizers, light stabilizers, UV absorbers, and the like may be included.

Through a process of collecting the fibers thus obtained by the method of producing the fibers of the embodiment and forming the fibers into a sheet shape, the nonwoven fabric can be preferably produced. For example, the resin mix melt discharged from the nozzle head portion is collected by a collection portion and deposited into a sheet shape while being cooled and extended, and thus, can be formed into a nonwoven fabric. The collection portion preferably includes a collection electrode and a high-voltage generator connected to the collection electrode from the aspect of enhancing capture efficiency. The collection electrode and the high-voltage generator in this collection portion may double as the charged electrode and as the high-voltage generator described above, or may be disposed separately from these.

In the method of producing the nonwoven fabric of the embodiment, as described above, the ultrafine fibers can be uniformly and efficiently produced at high speed from the resin mix melt of the component A and the component B, and therefore, the nonwoven fabric of the present invention having a larger size can be industrially efficiently produced on an actual producing line.

### EXAMPLES

Hereinafter, the present invention will be described more in detail with reference to Examples, but the present invention is not limited thereto. Terms "part" and "%" in the Examples is based on mass unless otherwise noted. The symbol "←" means the same value as a value in a left column, and the symbol "-" below means that the relevant item has no value. The details of the compounds described in Table 1 are as shown in Table 2.

### (Examples 1 to 3)

PCL as the component A and glyceryl behenate as the component B were mixed in the proportions shown in Table 1, and thus, a thermoplastic resin composition was made. A melt of the thermoplastic resin composition was fabricated, and fiber samples of Examples 1 to 3 were fabricated by a melt electrospinning method using one nozzle. Simultaneously with spinning, the fibers were deposited, and thus, nonwoven fabric samples (basis weight 5 g/m²) of Examples 1 to 3 were fabricated. The average fiber diameter of the nonwoven fabric sample was 2 µm. In the melt electrospinning method, the applied voltage was -10 kV. A 180°C heating fluid was sprayed on the thermoplastic resin composition in a molten state discharged from the nozzle, and thus, extension was performed. The fiber samples of Examples 1 and 2 had structures in which the skin layer of the component B covered the core portion layer of the component A as illustrated in FIG. 1.

### (Examples 4 and 5)

Fiber samples and nonwoven fabric samples of Examples 3 and 4 were fabricated similarly to Example 1 except that the compounds shown in Tables 1 and 2 were used as the component B.

### (Comparative Example 1)

A fiber sample and a nonwoven fabric sample of Comparative Example 1 were fabricated similarly to Example 1 except that the component B was not used.

### (Comparative Example 2)

A fiber sample and a nonwoven fabric sample of Comparative Example 2 were fabricated similarly to Example 1 except that the content percentage of the component B was 5 mass%. In the fiber sample of Comparative Example 2, the structure in which the component B was arranged on the fiber surface was not observed.

### (Comparative Example 3)

A fiber sample and a nonwoven fabric sample of Comparative Example 3 were fabricated similarly to Example 1 except that the compounds shown in Tables 1 and 2 were used instead of the component B.

### (Comparative Example 4)

The fabrication of a fiber sample and a nonwoven fabric material of Comparative Example 4 was attempted similarly to Example 1 except that the compounds shown in Tables 1 and 2 were used instead of the component B. However, in the spinning process, smoke was generated, and therefore, the fiber sample and the nonwoven fabric sample failed to be obtained.

### (Comparative Example 5)

Fibers were fabricated by a similar method to that of Example 1 with the component A alone, using the compounds in Tables 1 and 2 as the component A. The component B was heat melted, and when the component B turned to a liquid, the fibers of the component A were impregnated with the component B, and thus, a fiber sample and a nonwoven fabric sample of Comparative Example 5 were fabricated.

### (Comparative Example 6)

A fiber sample and a nonwoven fabric sample of Comparative Example 6 were fabricated similarly to Example 1 except that compounds shown in Tables 1 and 2 were used instead of the component B.

Wetting tensions and contact angles of the component B were measured for the respective Examples and the respective Comparative Examples mentioned above. These were measured based on (Method for wetting tension test of fiber) and (Method for measuring contact angle of Component B) mentioned above. The persistence of hydrophilicity in water was measured based on (Method for confirming hydrophilizing property persistence in fiber) below.

### (Method for confirming hydrophilizing property persistence in fiber)

50 mL of deionized water was put in a 100 mL beaker in an environment region with a temperature of 23°C and a relative humidity (RH) of 50%, and 0.5 g of the fibers were taken out and left to stand in the deionized water for 24 hours. Thereafter, the fibers were taken out, sandwiched between filter papers, and loaded for 10 minutes with a 2 kg weight, and thus, the deionized water was sufficiently removed. In order to further remove the deionized water of the fibers, drying under reduced pressure was performed. Specifically, the fibers were dried for 24 hours at a temperature of 40°C and a pressure of -0.04 MPa. Thereafter, the wetting tension test was performed similarly to (Method for wetting tension test of fiber) mentioned above on the fibers, and whether the fibers had the same value as that before preservation in the deionized water or not was confirmed. When the change value was 0, it was determined that the hydrophilizing property was successfully maintained. When the change value was larger than 0, it was determined that the hydrophilizing property was reduced. (Change value) = (wetting test liquid value (surface tension) before preservation in water) - (wetting test liquid value (surface tension) after preservation in water)

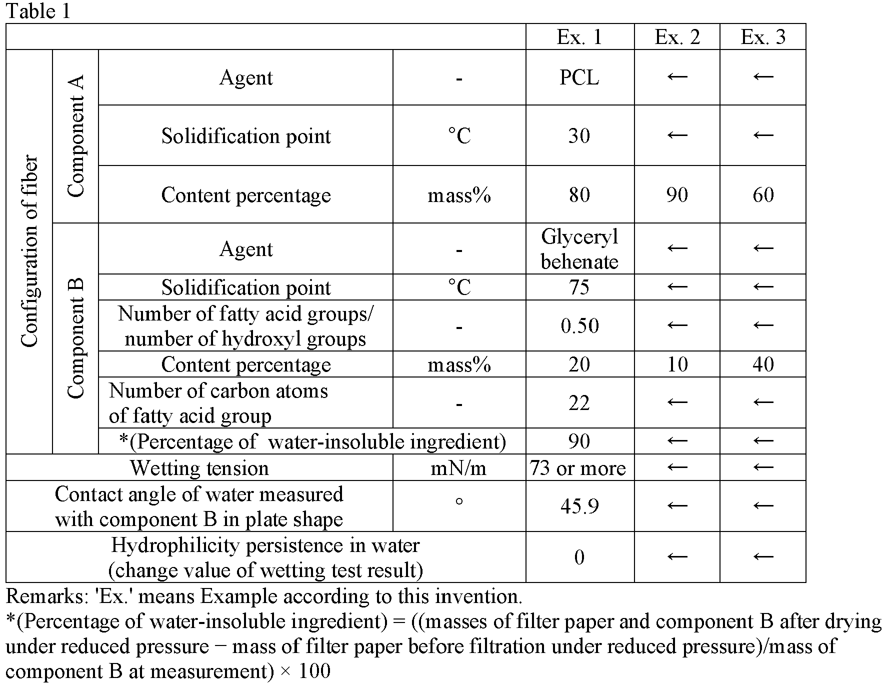

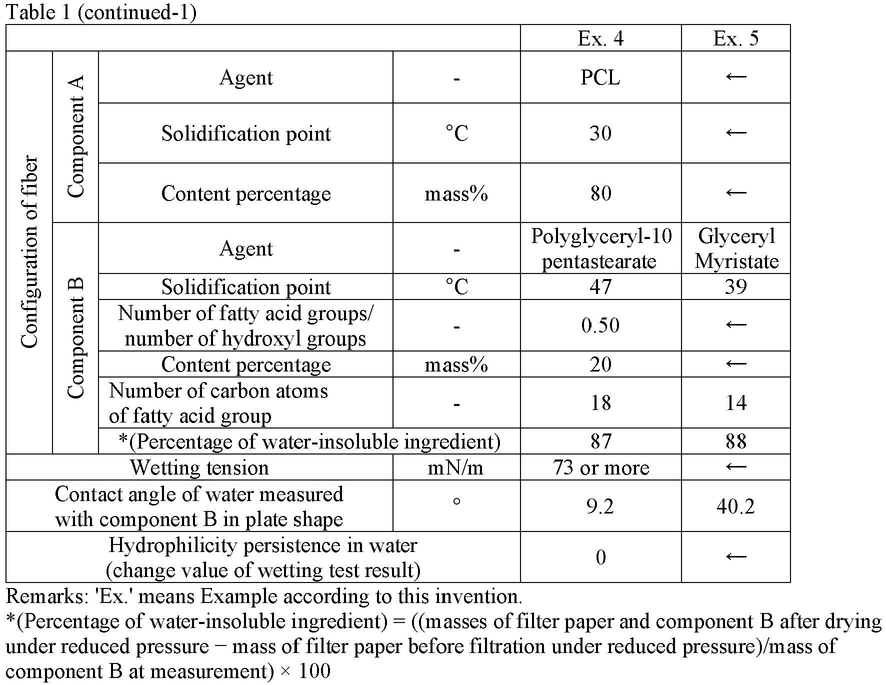

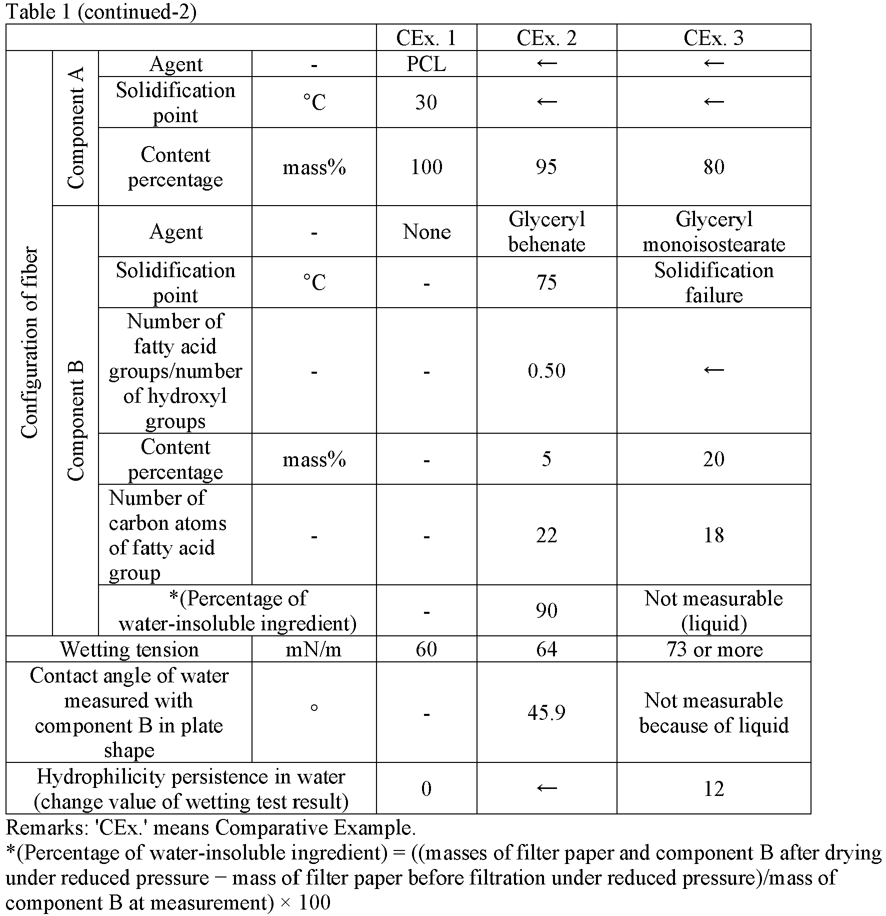

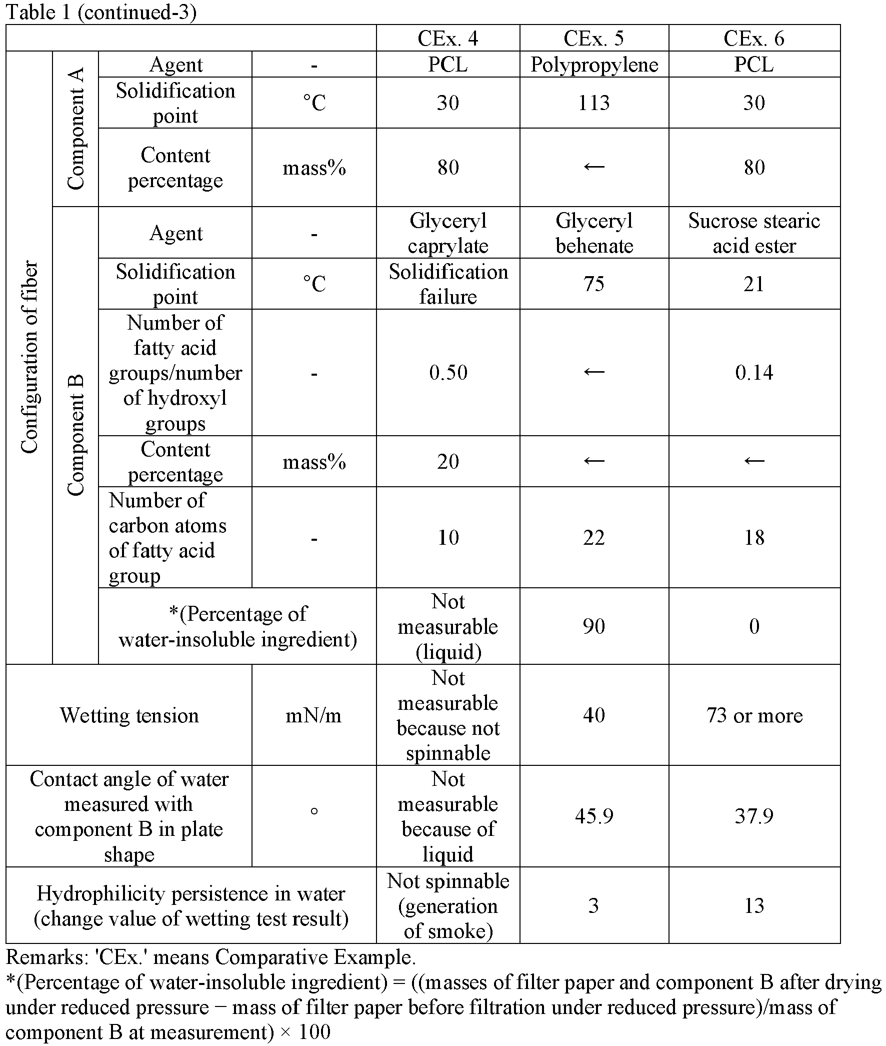

**Table 2**

| Compound | Manufacturer | Type number |
|---|---|---|
| Polycaprolactone | Ingevity Corp. | Capa 6250 |
| Polypropylene | Lyondellbasell Industries N.V. | Metocene MF650Y |
| Glyceryl behenate | Taiyo Kagaku Co., Ltd. | SUNSOFT No.8100-CK |
| Polyglyceryl-10 pentastearate | Taiyo Kagaku Co., Ltd. | SUNSOFT Q-185S-C |
| Glyceryl Myristate | Nikko Chemicals Co., Ltd. | NIKKOL MGM |
| Glyceryl monoisostearate | Nikko Chemicals Co., Ltd. | NIKKOL MGIS |
| Glyceryl caprylate | Taiyo Kagaku Co., Ltd. | SUNSOFT No.760-C |
| Sucrose stearic acid ester | Mitsubishi Chemical Corporation | RYOTO Sugar Ester S-1170 |

As shown in Table 1, with respect to Comparative Example 1 having a content percentage of the component B of 5%, the wetting tensions of the fibers after spinning were all 73 mN/m or more in Examples 1 to 5, and the hydrophilicity was sufficient. That is, it was confirmed that those having the wetting tension test liquids of up to 73 mN/m permeated. Compared with Comparative Example 3 whose compound used instead of the component B was in a liquid form, Examples 1 to 5 did not have any change in hydrophilicity persistence in water as well from that before immersion in water. Compared with Comparative Example 4 whose compound used instead of the component B had less than 14 carbon atoms, Examples 1 to 5 successfully obtained the fiber samples. Compared with Comparative Example 5 that used polypropylene instead of the component A and in which the component B was added later, Examples 1 to 5 had the wetting tension test liquids of up to 73 mN/m permeating, and did not have any change in hydrophilicity persistence in water as well from that time before immersion in water.

Having described our invention as related to this embodiments and Examples, it is our intention that the invention not be limited by any of the details of the description, unless otherwise specified, but rather be construed broadly within its spirit and scope as set out in the accompanying claims.

The present application claims priority of Patent Application No. 2022-189676, filed in Japan on November 28, 2022, which is herein incorporated by reference as part of the present specification.

### DESCRIPTION OF SYMBOLS

1 fiber
2 Core portion layer of component A
3 Skin layer of component B

## Claims

1. A fiber comprising:
50 mass% or more of a component A below; and
10 mass% or more of a component B below,
with respect to a mass of a whole fiber, and
comprising the component A and the component B inside the fiber,
wherein
the component A is an aliphatic polyester, and
the component B is a compound that is an ester compound of a polyhydric alcohol and a fatty acid, is water-insoluble, has a solidification point of 30°C or more, and includes a fatty acid group having 14 or more and less than 24 carbon atoms.

2. The fiber according to claim 1, wherein the fiber has a wetting tension test value of 73 mN/m or more.

3. The fiber according to claim 1 or 2, wherein the component B includes a compound having a contact angle of water measured in a plate shape of 46° or less.

4. The fiber according to any one of claims 1 to 3, wherein the component A includes a biodegradable compound.

5. The fiber according to claim 4, wherein the biodegradability means 30% or more of a biodegradation degree of polyester measured in compliance with Japanese Industrial Standard K 6953-1.

6. The fiber according to any one of claims 1 to 5, wherein the component A includes one or two or more selected from polycaprolactone, polybutylene succinate, polybutylene succinate adipate, and polydioxanone.

7. The fiber according to claim 6, wherein the component A includes polycaprolactone.

8. The fiber according to any one of claims 1 to 7, wherein a part of the component B is arranged on a fiber surface.

9. The fiber according to any one of claims 1 to 8, wherein the component A has a content percentage with respect to the mass of the whole fiber of 55 mass% or more and 90 mass% or less, preferably 60 mass% or more and 87 mass% or less, and more preferably 75 mass% or more and 85 mass% or less.

10. The fiber according to any one of claims 1 to 9, wherein the component B has a ratio of a number of fatty acid groups to a number of hydroxyl groups (fatty acid groups/hydroxyl groups) of 0.6 or less.

11. The fiber according to any one of claims 1 to 10, wherein the component B includes a compound without a repeating unit in the fatty acid group.

12. The fiber according to any one of claims 1 to 11, wherein the fatty acid group in the compound included in the component B is a saturated fatty acid group, and the saturated fatty acid group is preferably a straight chain saturated fatty acid.

13. The fiber according to any one of claims 1 to 12, wherein the compound included in the component B has a hydrophilic group whose molecular weight is 100 g/mol or less.

14. The fiber according to any one of claims 1 to 13, wherein the component B has a content percentage with respect to the mass of the whole fiber of 11 mass% or more and 40 mass% or less, preferably 15 mass% or more and 30 mass% or less, and more preferably 18 mass% or more and 25 mass% or less.

15. The fiber according to any one of claims 1 to 14, wherein a compound included in the component B has a solidification point of 40°C or more and 100°C or less, preferably 50°C or more and 90°C or less, and more preferably 70°C or more and 80°C or less.

16. The fiber according to any one of claims 1 to 15, wherein a fatty acid group in a compound included in the component B has 16 or more and 23 or less carbon atoms, preferably 18 or more and 22 or less carbon atoms, and more preferably 20 or more and 22 or less carbon atoms.

17. The fiber according to any one of claims 1 to 16, wherein the component B includes a compound having a contact angle of water measured in a plate shape of 9.2° or more and 45.9° or less.

18. The fiber according to any one of claims 1 to 17, wherein the component B includes one or two or more selected from glycerin fatty acid ester compounds and polyglyceryl fatty acid ester compounds.

19. The fiber according to any one of claims 1 to 18, wherein the component B includes one or two or more selected from glyceryl behenate, polyglyceryl pentastearate, and glyceryl myristate, and preferably includes glyceryl behenate.

20. The fiber according to any one of claims 1 to 19, wherein the fiber has a fiber diameter of 0.1 µm or more and 5 µm or less.

21. The fiber according to any one of claims 1 to 19, wherein the fiber has a fiber diameter of 0.5 µm or more and 2.5 µm or less.

22. A nonwoven fabric comprising the fiber according to any one of claims 1 to 21.

23. The nonwoven fabric according to claim 22, wherein the nonwoven fabric has an average fiber diameter of 0.1 µm or more and 5 µm or less.

24. The nonwoven fabric according to claim 22, wherein the nonwoven fabric has an average fiber diameter of 0.5 µm or more and 2.5 µm or less.

25. A fiber product comprising the fiber according to any one of claims 1 to 21 or the nonwoven fabric according to any one of claims 22 to 24.

26. The fiber product according to claim 25, wherein the fiber product is a skin care sheet.
